(19) Europäisches Patentamt
European Patent Office
Office européen des brevets

(11) **EP 1 621 449 B1**

(12) **EUROPÄISCHE PATENTSCHRIFT**

(45) Veröffentlichungstag und Bekanntmachung des Hinweises auf die Patenterteilung:
**20.07.2011  Patentblatt 2011/29**

(51) Int Cl.:
***B62D 15/02*** *(2006.01)*       ***B60W 30/12*** *(2006.01)*

(21) Anmeldenummer: **05104643.1**

(22) Anmeldetag: **31.05.2005**

(54) **Verfahren zur Spurbreitenadaption bei einem Spurhaltesystem**

Method for adapting a lane keeping system to the lane width

Méthode d'adaptation d'un système de guidage à la largeur de la voie

(84) Benannte Vertragsstaaten:
**DE FR GB SE**

(30) Priorität: **31.07.2004   DE 102004037298**

(43) Veröffentlichungstag der Anmeldung:
**01.02.2006   Patentblatt 2006/05**

(73) Patentinhaber: **Robert Bosch GmbH**
**70442 Stuttgart (DE)**

(72) Erfinder:
• **Scherl, Michael**
**74321, Bietigheim (DE)**

• **Weilkes, Michael**
**74343, Sachsenheim (DE)**
• **Buerkle, Lutz**
**71229, Leonberg (DE)**
• **Rentschler, Tobias**
**75180, Pforzheim (DE)**

(56) Entgegenhaltungen:
EP-A- 0 771 714      DE-A1- 10 117 237
DE-A1- 10 210 546      JP-A- 11 189 166
US-A- 5 483 453

EP 1 621 449 B1

**Beschreibung**

Stand der Technik

Die Erfindung betrifft ein Verfahren zur Anpassung eines auf das Lenkrad fahrerunabhängig ausgeübten Lenkraddrehmoments bei einem Spurhaltesystem eines Kraftfahrzeugs.

Aus der DE 102 10 548 A1 ist ein Querführungssystem für ein Kraftfahrzeug bekannt, mit einer Sensoreinrichtung zur Erfassung der Ist-Position des Fahrzeugs relativ zu den Grenzen der befahrenen Spur, einer Vorgabeeinrichtung für einen Sollwert der Querposition und einer Verarbeitungseinrichtung zur Ausgabe eines durch Soll/Ist-Vergleich bestimmten Ausgangssignals. Die Vorgabeeinrichtung weist ein Einstellelement zur manuellen Einstellung einer lateralen Abweichung des Sollwertes von der Spurmitte auf.

Aus der JP 11189166 A ist eine Vorrichtung zur Verhinderung einer Spurabweichung bekannt. Diese gibt dem Fahrer bei nur geringfügiger Abweichungswahrscheinlichkeit von der Fahrspur sein gewohntes Fahrgefühl, indem die Lenkbewegungen des Fahrers so umgesetzt werden, dass das Fahrzeug der Fahrspur folgt.

Die Merkmale der Oberbegriffe der unabhängigen Ansprüche sind der JP 11189166 A entnommen.

Vorteile der Erfindung

Die Erfindung betrifft ein Verfahren zur Anpassung eines auf das Lenkrad fahrerunabhängig ausgeübten Lenkraddrehmoments bei einem Spurhaltesystem eines Kraftfahrzeugs, bei dem

- eine die laterale Abweichung des Fahrzeugs oder der Fahrzeugtrajektorie von einer Ideallinie charakterisierende Abweichungsgröße ermittelt wird und
- abhängig von der Abweichungsgröße ein fahrerunabhängiges Lenkraddrehmoment auf das Lenkrad ausgeübt wird.

Der Kern der Erfindung besteht darin, dass

- die Fahrbahnbreite ermittelt wird und
- das Drehmoment an die Fahrbahnbreite angepasst wird bzw. das Lenkraddrehmoment zusätzlich von der Fahrbahnbreite abhängt

Damit lässt sich ein Spurhaltesystem für unterschiedlich breite Fahrbahnen einsetzen.

Eine vorteilhafte Ausgestaltung der Erfindung ist dadurch gekennzeichnet, dass es sich bei der Ideallinie um die Spurmitte handelt. Damit wird eine Führung des Fahrzeugs in der Spurmitte gewährleistet.

Eine vorteilhafte Ausgestaltung der Erfindung ist dadurch gekennzeichnet, dass es sich bei der Abweichungsgröße um den seitlichen Versatz des Fahrzeugs von der Fahrbahnmitte oder die Differenz zwischen Ideallinie und Fahrzeugtrajektorie handelt.

Erfindungsgemäß ist vorgesehen, dass

- wenn die Abweichungsgröße kleiner oder gleich einem ersten Grenzwert ist, kein Lenkraddrehmoment ausgeübt wird,
- wenn die Abweichungsgröße den ersten Grenzwert überschreitet, ein Lenkraddrehmoment ausgeübt wird.

Bei diesem Lenkraddrehmoment kann es sich um ein mit der Abweichungsgröße monoton anwachsendes Drehmoment handeln, d.h. mit steigender Abweichungsgröße vergrößert sich auch das Lenkraddrehmoment. Insbesondere kann es sich auch um ein bzgl. der Abweichungsgröße linear anwachsendes Lenkraddrehmoment handeln.

Eine vorteilhafte Ausgestaltung der Erfindung ist dadurch gekennzeichnet, dass

- wenn die Abweichungsgröße kleiner oder gleich einem ersten Grenzwert ist, kein Lenkraddrehmoment ausgeübt wird,
- wenn die Abweichungsgröße den ersten Grenzwert überschreitet und einen zweiten Grenzwert unterschreitet, ein mit der Abweichungsgröße monoton anwachsendes Lenkraddrehmoment ausgeübt wird und
- wenn die Abweichungsgröße größer oder gleich dem zweiten Grenzwert ist, das Lenkraddrehmoment auf einem konstanten Wert gehalten wird.

Durch die Totzone ist es möglich, erst bei konkreter Gefahr des Verlassens der Fahrbahn ein Lenkraddrehmoment auszugeben. Damit wird eine Bevormundung des Fahrers weitestgehend vermieden. Das Lenkraddrehmoment ist so gerichtet, dass es auf eine Verringerung der Abweichungsgröße zielt.

Eine vorteilhafte Ausgestaltung der Erfindung ist dadurch gekennzeichnet, dass der erste Grenzwert kleiner als der zweite Grenzwert ist.

Eine vorteilhafte Ausgestaltung der Erfindung ist dadurch gekennzeichnet, dass für den Fall, dass die Abweichungsgröße den ersten Grenzwert überschreitet und einen zweiten Grenzwert unterschreitet, ein mit der Abweichungsgröße linear anwachsendes Lenkraddrehmoment ausgeübt wird.

Erfindungsgemäß ist weiterhin vorgesehen, dass der erste Grenzwert abhängig von der ermittelten Fahrspurbreite ist.

Eine vorteilhafte Ausgestaltung der Erfindung ist dadurch gekennzeichnet, dass der erste Grenzwert mit wachsender Fahrspurbreite anwächst. Dadurch ist es möglich, bei breiterer Fahrspur eine größere Totzone zu erlauben.

Die Erfindung ist dadurch gekennzeichnet, dass der erste Grenzwert

- nichtlinear mit der Spurbreite anwächst, wenn die Spurbreite einen Referenzwert unterschreitet und
- linear mit der Spurbreite anwächst, wenn die Spurbreite einen Referenzwert überschreitet.

Eine vorteilhafte Ausgestaltung der Erfindung ist dadurch gekennzeichnet, dass der zweite Grenzwert abhängig von der ermittelten Fahrspurbreite ist.
Eine vorteilhafte Ausgestaltung der Erfindung ist dadurch gekennzeichnet, dass der zweite Grenzwert mit wachsender Fahrspurbreite anwächst
Eine vorteilhafte Ausgestaltung der Erfindung ist dadurch gekennzeichnet, dass der zweite Grenzwert

- nichtlinear mit der Spurbreite anwächst, wenn die Spurbreite einen Referenzwert unterschreitet und
- linear mit der Spurbreite anwächst, wenn die Spurbreite einen Referenzwert überschreitet.

Eine vorteilhafte Ausgestaltung der Erfindung ist dadurch gekennzeichnet,

- dass der erste Grenzwert und der zweite Grenzwert abhängig von der ermittelten Fahrspurbreite sind,
- dass erste Grenzwert und der zweite Grenzwert mit wachsender Fahrspurbreite anwachsen,
- dass der erste Grenzwert und der zweite Grenzwert nichtlinear mit der Spurbreite anwachsen, wenn die Spurbreite einen Referenzwert unterschreitet und
- dass der erste Grenzwert und der zweite Grenzwert linear mit der Spurbreite anwachsen, wenn die Spurbreite (B) einen Referenzwert überschreitet,
- wobei für den Fall, dass die Spurbreite einen Referenzwert unterschreitet, der erste Grenzwert stärker anwächst als der zweite Grenzwert.

Eine vorteilhafte Ausgestaltung der Erfindung ist dadurch gekennzeichnet, dass

- der erste Grenzwert als kubische Funktion der Spurbreite anwächst, wenn die Spurbreite den Referenzwert unterschreitet und/oder
- der zweite Grenzwert als quadratische Funktion der Spurbreite anwächst, wenn die Spurbreite den Referenzwert unterschreitet.

Die Verwendung quadratischer und kubischer Funktionen hat sich in Fahrversuchen als geeignet erwiesen und ist numerisch besonders einfach zu implementieren.
Eine vorteilhafte Ausgestaltung der Erfindung ist dadurch gekennzeichnet, dass die Abweichungsgröße wenigstens mittels einer Videosensorik ermittelt wird.

Zeichnung

Die Zeichnung besteht aus den Figuren 1 bis 3.

Figur 1 zeigt eine Kennlinie für eine enge Querführung.

Figur 2 zeigt eine Kennlinie für eine weite Querführung.

Figur 3 zeigt den Ablauf des erfindungsgemäßen Verfahrens.

Ausführungsbeispiele

Die Erfindung dient dazu, die Querführungsunterstützung bei Kraftfahrzeugen komfortabel an die Fahrbahnbreite zu adaptieren und dadurch dem Fahrer eine Querführung auch auf engeren oder noch breiteren Straßen als die durchschnittliche Autobahnspurbreite zu ermöglichen.
Dazu werden bestimmte Parameter der Führungskennlinie adaptiert. Die Führungskennlinie beschreibt dabei die Art der Querführung. Mit dieser Kennlinie kann der ganze Bereich von enger Fahrzeugquerführung mit hoher Fahrerentlastung bis zu einer weiten Führung mit reiner Spurverlassensfunktion an den Fahrbahnmarkierungen eingestellt werden. Durch die Spurbreitenadaption geeigneter Kennlinienparameter ist eine ähnliche bzw. identische Art der Führung auf unterschiedlichen Fahrbahnbreiten möglich. Damit ist eine automatische Anpassung der Fahrzeugquerführung auf breiten Straßen (z.B. Autobahnen) und auf engen Straßen (Landstraßen) möglich. Der Fahrer kann dadurch sein LKS-System (LKS-System = "lane keeping support system"= Spurhaltesystem) für unterschiedlich breite Straßen verwenden und hat damit einen erweiterten Nutzungsbereich seines Systems (Mehrnutzen).
Ein LKS-System kann unterschiedliche Führungsarten aufweisen. Als Beispiele seien zwei Führungsarten genannt.

Führungsart 1: enge Führung

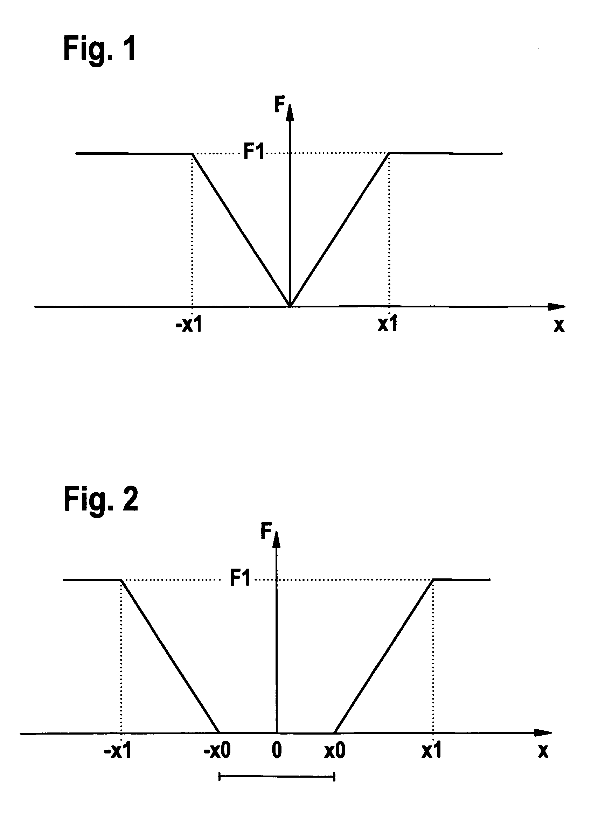

Bei dieser Führungsart erfolgt eine enge Führung des Fahrzeugs in der Spurmitte und keine bzw. allenfalls minimale Abweichungen werden toleriert. Dadurch wird der Fahrer bei seiner Lenkaufgabe stark entlastet. Für eine solche enge Spurführung eignet sich die in Fig. 1 dargestellte lineare Führungskennlinie.
In Fig. 1 ist in Abszissenrichtung die Differenz x zwischen der gewünschten Ideallinie der Spurführung und der realen bzw. vom Fahrer vorgegebenen Fahrzeugbewegung aufgetragen. Bei dieser Differenz x kann es sich beispielsweise um den seitlichen Versatz des Fahrzeugs von der Fahrbahnmitte handeln, welcher auch als "Ablage des Fahrzeugs" bezeichnet wird. In Ordinatenrichtung ist die auf das Lenkrad einwirkende Kraft F aufgetragen. Bei F kann es sich auch um ein Drehmoment handeln. Für $x = x1$ und
$x = -x1$ nimmt F den Maximalwert $F1$ an.
Fordert man vom LKS-System eine weite Führung, welche dem Fahrer nichts von seiner Lenkaufgabe abnimmt, sondern nur das Verlassen der Fahrbahn bei Berührung der Fahrbahnbegrenzung verhindert, dann kann die in Fig. 2 dargestellte Kennlinie mit einer sich von -x0 bis x0 erstreckenden lenkradkräftefreien Zone verwendet werden.

Entlang der Achsen sind in den Figuren 1 und 2 dieselben Größen aufgetragen.

Die in Fig. 1 und Fig. 2 dargestellten Führungskennlinien sind nur für eine Spurbreite gültig und bieten dort eine sichere Fahrzeugführung. Es hat sich als vorteilhaft erwiesen,

- den Maximalwert F0 der Lenkradkraft auch bei Variation der Fahrbahnbreite konstant zu halten,
- jedoch die Werte x0 und x1 an die aktuelle Fahrbahnbreite anzupassen.

Durch das Spurhaltesystem wird die gesamte Fahrbahnbreite B ermittelt. Dies kann z.B. über eine Auswertung von Videosignalen erfolgen. Die Anpassung der Parameter x0 und x1 an die aktuelle Spurbreite B erfolgt durch einen Vergleich mit einem Referenzzustand.

Als Referenzzustand wird eine Fahrbahn der Breite B_ref betrachtet. Für B = B_ref nehmen die Parameter x0 und x1 die Werte x0_ref und x1_ref an.

Nun werden die beiden Fälle einer Fahrbahn mit Spurbreite B > B_ref und einer Fahrbahn mit Spurbreite B < B_ref unterschieden.

<u>Fall 1: B > B_ref (breite Fahrbahn):</u>

Die Parameter x0 und x1 können anhand der einfachen linearen Beziehungen

$$x0/x0\_ref = B/B\_ref$$

und

$$x1/x1\_ref = B/B\_ref$$

ermittelt werden. Die Werte von x0 und x1 wachsen linear mit der Breite der Fahrbahn. Das ist auch anschaulich plausibel, da mit wachsender Breite sowohl eine breitere kräftefreie Zone (-x0 < x < x0) als auch ein langsameres Anwachsen der Lenkradkraft akzeptiert werden können.

<u>Fall 2: B < B_ref (enge Fahrbahn):</u>

Für den Erhalt einer sicheren Spurführung auf schmalen Fahrbahnen hat sich eine nichtlineare Anpassung als besonders geeignet erwiesen:

$$x0/x0\_ref = (B/B\_ref)^{n+m}$$

und

$$x1/x1\_ref = (B/B\_ref)^{n}$$

Der Parameter n gibt die Stärke der Adaption an. Weiter hat es sich als vorteilhaft herausgestellt, die Werte für die kräftefreie Zone stärker zu adaptieren als den Wert x1. Dies ist dadurch begründet, dass der vorhandene laterale Abstand zur Fahrbahnbegrenzung sich bei einer engeren Fahrbahn verringert. Für m > 0 findet eine stärkere Adaption für x0 statt. Es bietet sich insbesondere an,

- für n einen der Werte 2, 3, 4, 5, ... und
- für m einen der Werte 1, 2, 3, 4, ...

zu wählen. In Fahrversuchen stellte sich n=2 und m=1 als geeignetes Wertepaar heraus. Mit n=2 liegt eine quadratische Abhängigkeit von x1 von der Fahrbahnbreite B vor, n=2 und m= 1 liefern eine kubische Abhängigkeit von x0 von der Fahrbahnbreite (da n + m = 2 + 1 = 3).

Bei zu geringen Fahrbahnbreiten kann aus Sicherheitsgründen eine Abschaltung der LKS-Funktion erfolgen. Mit der beschriebenen Adaption können alle für eine Querführung eingesetzten Kennlinienfunktionen, welche die oben genannten Kennlinienparameter beinhalten, behandelt werden.

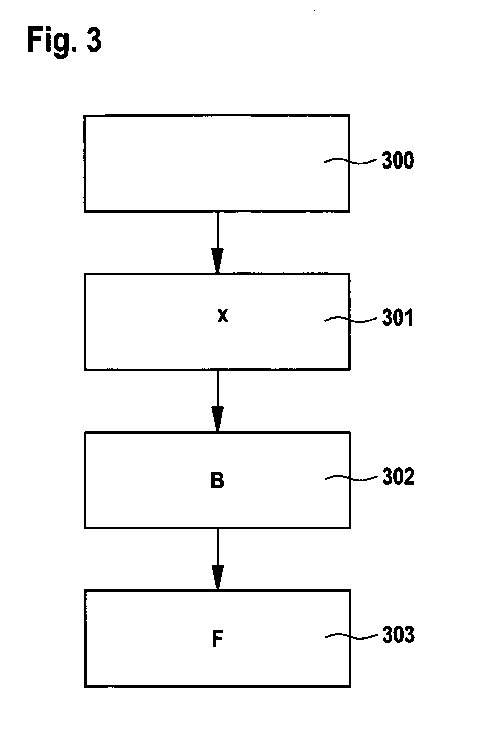

Der Ablauf des erfindungsgemäßen Verfahrens ist in Fig. 3 dargestellt. Nach dem Start in Block 300 wird in Block 301 eine die laterale Abweichung des Fahrzeugs oder der Fahrzeugtrajektorie von einer Ideallinie charakterisierende Abweichungsgröße x ermittelt. Anschließend wird in Block 302 die Fahrspurbreite B ermittelt und danach in Block 303 abhängig von der Abweichungsgröße und der Fahrspurbreite ein fahrerunabhängiges Lenkraddrehmoment auf das Lenkrad ausgeübt.

Es soll noch erwähnt werden, dass die Adaption nicht nur auf die positiven Werte von x im ersten Quadranten von Fig. 1 und Fig. 2 angewandt wird, sondern auch auf die negativen Werte von x.

**Patentansprüche**

1. Verfahren zur Ausübung eines fahrerunabhängigen Lenkraddrehmoments auf das Lenkrad eines Kraftfahrzeugs im Rahmen eines Spurhaltesystems, bei dem

    - eine die laterale Abweichung des Fahrzeugs oder der Fahrzeugtrajektorie von einer Ideallinie charakterisierende Abweichungsgröße (x) ermittelt wird und
- ein von der Abweichungsgröße abhängiges Lenkraddrehmoment (F) auf das Lenkrad ausgeübt wird,

wobei

- die Fahrbahnbreite (B) ermittelt wird und
- das Lenkraddrehmoment (F) zusätzlich von der Fahrbahnbreite (B) abhängt, wobei
- wenn die Abweichungsgröße (x) kleiner oder gleich einem ersten Grenzwert (x0) ist, kein Lenkraddrehmoment (F) ausgeübt wird,
- wenn die Abweichungsgröße (x) den ersten Grenzwert (x0) überschreitet, ein Lenkraddrehmoment (F) ausgeübt wird,

wobei der erste Grenzwert (x0) abhängig von der ermittelten Fahrspurbreite (B) ist, **dadurch gekennzeichnet, dass** der erste Grenzwert (x0)

- nichtlinear mit der Spurbreite (B) anwächst, wenn die Spurbreite (B) einen Referenzwert (B_ref) unterschreitet und
- linear mit der Spurbreite (B) anwächst, wenn die Spurbreite (B) einen Referenzwert (6_ref) überschreitet.

2. Verfahren nach Anspruch 1, **dadurch gekennzeichnet, dass** es sich bei der Ideallinie um die Spurmitte handelt.

3. Verfahren nach Anspruch 1, **dadurch gekennzeichnet, dass** es sich bei der Abweichungsgröße um eine Differenz zwischen idealer Trajektorie und Fahrzeugtrajektorie handelt.

4. Verfahren nach Anspruch 1, **dadurch gekennzeichnet, dass**

- wenn die Abweichungsgröße (x) den ersten Grenzwert (x0) überschreitet, ein mit der Abweichungsgröße monoton anwachsendes Lenkraddrehmoment (F) ausgeübt wird.

5. Verfahren nach Anspruch 4, **dadurch gekennzeichnet, dass**

- wenn die Abweichungsgröße (x) größer oder gleich einem zweiten Grenzwert (x1) ist, das Lenkraddrehmoment (F) auf einem konstanten Wert gehalten wird,
- wobei der erste Grenzwert (x0) kleiner als der zweite Grenzwert (x1) ist.

6. Verfahren nach Anspruch 5, **dadurch gekennzeichnet, dass** für den Fall, dass die Abweichungsgröße (x) den ersten Grenzwert (x0) überschreitet und den zweiten Grenzwert (x1) unterschreitet, ein mit der Abweichungsgröße linear anwachsendes Lenkraddrehmoment (F) ausgeübt wird.

7. Verfahren nach Anspruch 1, **dadurch gekennzeichnet, dass** der erste Grenzwert (x0) mit wachsender Fahrspurbreite (B) anwächst

8. Verfahren nach Anspruch 1, **dadurch gekennzeichnet, dass** der erste Grenzwert (x0) als kubische Funktion der Spurbreite (B) anwächst, wenn die Spurbreite (B) den Referenzwert (6_ref) unterschreitet.

9. Verfahren nach Anspruch 5, **dadurch gekennzeichnet, dass** der zweite Grenzwert (x1) abhängig von der ermittelten Fahrspurbreite (B) ist.

10. Verfahren nach Anspruch 9, **dadurch gekennzeichnet, dass** der zweite Grenzwert (x1) mit wachsender Fahrspurbreite (B) anwächst

11. Verfahren nach Anspruch 9, **dadurch gekennzeichnet, dass** der zweite Grenzwert (x1)

- nichtlinear mit der Spurbreite (B) anwächst, wenn die Spurbreite (B) einen Referenzwert (B_ref) unterschreitet und
- linear mit der Spurbreite (B) anwächst, wenn die Spurbreite (B) einen Referenzwert (B_ref) überschreitet.

12. Verfahren nach Anspruch 11, **dadurch gekennzeichnet, dass** der zweite Grenzwert (x1) als quadratische Funktion der Spurbreite (B) anwächst, wenn die Spurbreite (B) den Referenzwert (B_ref) unterschreitet.

13. Verfahren nach Anspruch 5, **dadurch gekennzeichnet,**

- **dass** der erste Grenzwert (x0) und der zweite Grenzwert (x1) abhängig von der ermittelten Fahrspurbreite (B) sind,
- **dass** erste Grenzwert (x0) und der zweite Grenzwert (x1) mit wachsender Fahrspurbreite (B) anwachsen,
- **dass** der erste Grenzwert (x0) und der zweite Grenzwert (x1) nichtlinear mit der Spurbreite (B) anwachsen, wenn die Spurbreite (B) einen Referenzwert (B_ref) unterschreitet und
- **dass** der erste Grenzwert (x0) und der zweite Grenzwert (x1) linear mit der Spurbreite (B) anwachsen, wenn die Spurbreite (B) einen Referenzwert (B_ref) überschreitet,
- wobei für den Fall, dass die Spurbreite (B) einen Referenzwert (B_ref) unterschreitet, der erste Grenzwert (x0) stärker anwächst als der zweite Grenzwert (x1).

14. Verfahren nach Anspruch 13, **dadurch gekennzeichnet, dass**

   - der erste Grenzwert (x0) als kubische Funktion der Spurbreite (B) anwächst, wenn die Spurbreite (B) den Referenzwert (B_ref) unterschreitet und
   - der zweite Grenzwert (x1) als quadratische Funktion der Spurbreite (B) anwächst, wenn die Spurbreite (B) den Referenzwert (B_ref) unterschreitet.

15. Verfahren nach Anspruch 1, **dadurch gekennzeichnet, dass** die Abweichungsgröße (x) wenigstens mittels einer Videosensorik ermittelt wird.

**Claims**

1. Method for applying a driver-dependent steering wheel torque to the steering wheel of a motor vehicle within the scope of a lane keeping system, in which

   - a deviation variable (x) which characterizes the lateral deviation of the vehicle or of the vehicle trajectory from an ideal line is determined and
   - a steering wheel torque (F) which is dependent on the deviation variable is applied to the steering wheel,

   wherein

   - the lane width (B) of the lane is determined, and
   - the steering wheel torque (F) depends additionally on the lane width (B),

   wherein

   - if the deviation variable (x) is smaller than or equal to a first limiting value (x0), no steering wheel torque (F) is applied,
   - if the deviation variable (x) exceeds the first limiting value (x0), a steering wheel torque (F) is applied,

   wherein the first limiting value (x0) is dependent on the determined lane width (B),
   **characterized in that** the first limiting value (x0)

   - increases non-linearly with the lane width (B) if the lane width (B) drops below a reference value (B_ref), and
   - increases linearly with the lane width (B) if the lane width (B) exceeds a reference value (B_ref).

2. Method according to Claim 1, **characterized in that** the ideal line is the centre of the lane.

3. Method according to Claim 1, **characterized in that** the deviation variable is a difference between an ideal trajectory and the vehicle trajectory.

4. Method according to Claim 1, **characterized in that**

   - if the deviation variable (x) exceeds the first limiting value (x0), a steering wheel torque (F) which increases monotonously with the deviation variable is applied.

5. Method according to Claim 4, **characterized in that**

   - if the deviation variable (x) is greater than or equal to a second limiting value (x1), the steering wheel torque (F) is held at a constant value,
   - wherein the first limiting value (x0) is smaller than the second limiting value (xl).

6. Method according to Claim 5, **characterized in that** if the deviation variable (x) exceeds the first limiting value (x0) and drops below the second limiting value (x1), a steering wheel torque (F) which increases linearly with the deviation variable is applied.

7. Method according to Claim 1, **characterized in that** the first limiting value (x0) increases as the lane width (B) becomes larger.

8. Method according to Claim 1, **characterized in that** the first limiting value (x0) increases as a cubic function if the lane width (B) drops below the reference value (B_ref).

9. Method according to Claim 5, **characterized in that** the second limiting value (x1) is dependent on the determined lane width (B).

10. Method according to Claim 9, **characterized in that** the second limiting value (x1) increases as the lane width (B) becomes larger.

11. Method according to Claim 9, **characterized in that** the second limiting value (x1)

   - increases non-linearly with the lane width (B) if the lane width (B) drops below a reference value (B_ref), and
   - increases linearly with the lane width (B) if the lane width (B) exceeds a reference value (B_ ref).

12. Method according to Claim 11, **characterized in**

**that** the second limiting value (x1) increases as a quadratic function of the lane width (B) if the lane width (B) drops below the reference value (B_ref).

13. Method according to Claim 5, **characterized**

   - **in that** the first limiting value (x0) and the second limiting value (x1) are dependent on the determined lane width (B),
   - **in that** the first limiting value (x0) and the second limiting value (x1) increase as the lane width (B) becomes larger,
   - **in that** the first limiting value (x0) and the second limiting value (x1) increase non-linearly with the lane width (B) if the lane width (B) drops below a reference value (B_ref), and
   - **in that** the first limiting value (x0) and the second limiting value (x1) increase linearly with the lane width (B) if the lane width (B) exceeds a reference value (B_ref),
   - wherein if the lane width (B) drops below a reference value (B_ref), the first limiting value (x0) increases to a greater extent than the second limiting value (x1).

14. Method according to Claim 13, **characterized in that**

   - the first limiting value (x0) increases as a cubic function of the lane width (B) if the lane width (B) drops below the reference value (B_ref), and
   - the second limiting value (x1) increases as a quadratic function of the lane width (B) if the lane width (B) drops below the reference value (B_ref).

15. Method according to Claim 1, **characterized in that** the deviation variable (x) is determined at least by means of a video sensor system.

**Revendications**

1. Procédé pour appliquer indépendamment du conducteur un couple de rotation sur le volant d'un véhicule automobile dans le cadre d'un système de maintien sur la voie de circulation, et dans lequel

   - une grandeur d'écart (x) qui caractérise le décalage latéral du véhicule ou de la trajectoire du véhicule par rapport à une ligne idéale est déterminée et
   - un couple de rotation (F) est appliqué sur le volant en fonction de la grandeur d'écart,
   - la largeur (B) de la voie de circulation étant déterminée,
   - le couple de rotation (F) appliqué sur le volant dépendant de plus de la largeur (B) de la voie de circulation, tandis que
   - si la grandeur d'écart (x) est inférieure ou égale à une première valeur limite (x0), aucun couple de rotation (F) n'est appliqué sur le volant,
   - et que si la grandeur d'écart (x) dépasse la première valeur limite (x0), un couple de rotation (F) est appliqué sur le volant,
   - la première valeur limite (x0) dépendant de la largeur (B) qui a déterminée pour la voie de circulation,
   **caractérisé en ce que**
   la première valeur limite (x0) augmente de manière non linéaire avec la largeur (B) de la voie de circulation si la largeur (B) de la voie de circulation n'atteint pas une valeur de référence (B_ref) et
   **en ce qu'**elle augmente linéairement avec la largeur (B) de la voie de circulation si la largeur (B) de la voie de circulation dépasse une valeur de référence (B_ref).

2. Procédé selon la revendication 1, **caractérisé en ce que** la ligne idéale est le milieu de la voie de circulation.

3. Procédé selon la revendication 1, **caractérisé en ce que** la grandeur d'écart est la différence entre une trajectoire idéale et la trajectoire du véhicule.

4. Procédé selon la revendication 1, **caractérisé en ce qu'**un couple de rotation (F) qui augmente de manière monotone avec la grandeur d'écart est appliqué sur le volant si la grandeur d'écart (x) dépasse la première valeur limite (x0).

5. Procédé selon la revendication 4, **caractérisé en ce que** le couple de rotation (F) appliqué sur le volant est maintenu à une valeur constante si la grandeur d'écart (x) est supérieure ou égale à une deuxième valeur limite (x1), la première valeur limite (x0) étant inférieure à la deuxième valeur limite (x1).

6. Procédé selon la revendication 5, **caractérisé en ce qu'**un couple de rotation (F) qui augmente linéairement avec la grandeur d'écart est appliqué sur le volant au cas où la grandeur d'écart (x) dépasse la première valeur limite (x0) et n'atteint pas la deuxième valeur limite (x1).

7. Procédé selon la revendication 1, **caractérisé en ce que** la première valeur limite (x0) augmente lorsque la largeur (B) de la voie de circulation augmente.

8. Procédé selon la revendication 1, **caractérisé en ce que** la première valeur limite (x0) augmente en fonction du cube de la largeur (B) de la voie de circulation si la largeur (B) de la voie de circulation n'atteint pas la valeur de référence (B_ref).

**9.** Procédé selon la revendication 5, **caractérisé en ce que** la deuxième valeur limite (x1) dépend de la largeur (B) qui a été déterminée pour la voie de circulation.

**10.** Procédé selon la revendication 9, **caractérisé en ce que** la deuxième valeur limite (x1) augmente lorsque la largeur (B) de la voie de circulation augmente.

**11.** Procédé selon la revendication 9, **caractérisé en ce que** la deuxième valeur limite (x1) augmente de manière non linéaire avec la largeur (B) de la voie de circulation si la largeur (B) de la voie de circulation n'atteint pas une valeur de référence (B_ref) et augmente de manière linéaire avec la largeur (B) de la voie de circulation si la largeur (B) de la voie de circulation dépasse une valeur de référence (B_ref).

**12.** Procédé selon la revendication 11, **caractérisé en ce que** la deuxième valeur limite (x1) augmente en fonction du carré de la largeur (B) de la voie de circulation si la largeur (B) de la voie de circulation n'atteint pas la valeur de référence (B_ref).

**13.** Procédé selon la revendication 5, **caractérisé en ce que** la première valeur limite (x0) et la deuxième valeur limite (x1) dépendent de la largeur (B) déterminée pour la voie de circulation,
**en ce que** la première valeur limite (x0) et la deuxième valeur limite (x1) augmentent lorsque la largeur (B) de la voie de circulation augmente,
**en ce que** la première valeur limite (x0) et la deuxième valeur limite (x1) augmentent de manière non linéaire avec la largeur (B) de la voie de circulation si la largeur (B) de la voie de circulation n'atteint pas une valeur de référence (B_ref),
**en ce que** la première valeur limite (x0) et la deuxième valeur limite (x1) augmentent linéairement avec la largeur (B) de la voie de circulation si la largeur (B) de la voie de circulation dépasse une valeur de référence (B_ref) et
**en ce que** la première valeur limite (x0) augmente plus fortement que la deuxième valeur limite (x1) au cas où la largeur (B) de la voie de circulation n'atteint pas une valeur de référence (B_ref).

**14.** Procédé selon la revendication 13, **caractérisé en ce que** la première valeur limite (x0) augmente en fonction du cube de la largeur (B) de la voie de circulation si la largeur (B) de la voie de circulation n'atteint pas la valeur de référence (B_ref) et **en ce que** la deuxième valeur limite (x1) augmente en fonction du carré de la largeur (B) de la voie de circulation si la largeur (B) de la voie de circulation n'atteint pas la valeur de référence (B_ref).

**15.** Procédé selon la revendication 1, **caractérisé en ce que** la grandeur d'écart (x) est déterminée au moyen d'un ensemble de détecteurs vidéo.

# Fig. 1

# Fig. 2

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10210548 A1
- JP 11189166 A